# EUROPÄISCHE PATENTSCHRIFT

(11) **EP 1 840 016 B1**
(45) Veröffentlichungstag und Bekanntmachung des Hinweises auf die Patenterteilung: **17.11.2010**
(21) Anmeldenummer: 07003849.2
(22) Anmeldetag: 26.02.2007
(51) Int. Cl.: B62D 35/00

(54) **Luftleitvorrichtung für ein Fahrzeug**
Rear spoiler for a vehicle
Déflecteur aérodynamique pour véhicule

(30) Priorität: 28.03.2006 DE 102006014260
(43) Veröffentlichungstag der Anmeldung: 03.10.2007
(73) Patentinhaber: Dr. Ing. h.c. F. Porsche AG, 70435 Stuttgart (DE)
(72) Erfinder: Fröschle, Mathias, 73760 Ostfildern (DE); Schulzki, Markus, 71638 Ludwigsburg (DE)

(56) Entgegenhaltungen:
- EP-A- 1 738 996
- DE-A1-102004 030 571

## Beschreibung

Die Erfindung betrifft eine Luftleitvorrichtung für ein Fahrzeug nach dem Oberbegriff des Patentanspruchs 1. Eine solche Luftleiteinrichtung ist aus der DE 10 2004 030 571 Al bekannt.

Aus der DE 30 19 150 A1 ist eine Luftleitvorrichtung für ein Fahrzeug bekannt, die in einem oben liegenden Heckbereich des Fahrzeugs angeordnet ist und ein Luftleitelement umfasst, welches von einer Ruhestellung, in der es oberflächenbündig in den Formverlauf des Heckbereichs integriert ist, in eine ausgefahrene Betriebsstellung verlagerbar ist. Das Luftleitelement ist als Tragflügel ausgebildet, der mittels einer Betätigungseinrichtung von der Ruhestellung in die Betriebsstellung und umgekehrt verlagerbar bzw. überführbar ist.

Die DE 43 05 090 A1 offenbart ebenfalls eine Luftleitvorrichtung für ein Fahrzeug, die in einem Heckbereich des Fahrzeugs angeordnet ist und ein Luftleitelement umfasst, welches von einer Ruhestellung in eine ausgefahrene Betriebsstellung verlagerbar ist. Das Luftleitelement wird durch einen Heckspoiler gebildet, der in einer versenkten Aufnahme der Fahrzeugkarosserie angeordnet und mittels einer Betätigungseinrichtung von der Ruhestellung in die Betriebsstellung und umgekehrt verlagerbar ist.

Mit den aus der DE 30 19 150 A1 und aus der DE 43 05 090 A1 bekannten Luftleitvorrichtungen kann der Hinterachsabtriebsbeiwert (cₐₕ-Wert) des Kraftfahrzeugs bei gleichbleibendem oder auch verbessertem Luftwiederstandsbeiwert (c_{W}-Wert) erhöht werden, wobei diese bekannten Luftleitelemente in der Ruhestellung und in der Betriebsstellung jeweils dieselbe Quererstreckung aufweisen.

Die nachveröffentlichte DE 10 2005 030 203 A1 offenbart eine Luftleitvorrichtung für ein Fahrzeug, die ein mittleres Hauptluftleitelement sowie zwei seitliche Zusatzluftleitelemente umfasst, wobei mit Hilfe der seitlichen Zusatzluftleitelemente die Quererstreckung der Luftleitvorrichtung in der Betriebsstellung vergrößert werden kann. Hierdurch kann die wirksame aerodynamische Anströmfläche der Luftleitvorrichtung in der Betriebsstellung vergrößert werden, wodurch insbesondere der Hinterachsabtriebsbeiwert weiter erhöht werden kann. Nach der DE 10 2005 03 203 erfolgt die Verstellbewegung der seitlichen Zusatzluftleitelemente dann, wenn das mittlere Hauptluftleitelement von der Ruhestellung in die Betriebsstellung verlagert wurde.

Hiervon ausgehend liegt der vorliegenden Erfindung das Problem zu Grunde eine neuartige Luftleitvorrichtung für ein Fahrzeug zu schaffen. Dieses Problem wird dadurch gelöst, dass die eingangs genannte Luftleitvorrichtung durch die Merkmale des kennzeichnenden Teils des Patentanspruchs 1 weitergebildet ist. Das Hauptluftleitelement ist in Längsrichtung des Fahrzeugs gesehen unter Ausbildung von mindestens zwei Hauptluftleitelementabschnitten derart mittig geteilt, dass bei der Verlagerung des Hauptluftleitelements von der Ruhestellung in die Betriebsstellung zumindest die seitlichen Hauptluftleitelementabschnitte quer zur Längsrichtung des Fahrzeugs verfahrbar sind. Bei der erfindungsgemäßen Luftleitvorrichtung kann innerhalb kürzester Zeit sowie auf einfache Art und Weise die Quererstreckung der erfindungsgemäßen Luftleitvorrichtung angepasst werden.

Vorzugsweise ist das Hauptluftleitelement bei der Verlagerung von der Ruhestellung, in welcher dasselbe in einen Formverlauf des Heckbereichs des Fahrzeugs integriert ist, in die Betriebsstellung aus dem Formverlauf des Heckbereichs heraus schwenkbar, wobei simultan bzw. gleichzeitig hierzu zumindest die seitlichen Hauptluftleitelementabschnitte quer zur Längsrichtung des Fahrzeugs unter Vergrößerung der Quererstreckung der Luftleitvorrichtung verfahrbar sind.

Nach einer ersten vorteilhaften Weiterbildung der Erfindung ist eine sich bei der Querverfahrung benachbarter Hauptluftleitelementabschnitte ausbildende Lücke durch ein Zusatzluftleitelement schließbar, welches in einen der benachbarten Hauptluftleitelementabschnitte integriert ist. Hiermit ist ein besonders einfache Bauform der erfindungsgemäßen Luftleitvorrichtung realisierbar.

Nach einer zweiten, alternativen vorteilhaften Weiterbildung der Erfindung ist eine sich bei der Querverfahrung benachbarter Hauptluftleitelementabschnitte ausbildende Lücke durch ein Zusatzluftleitelement schließbar, welches klappenartig ausgebildet und mit einem der benachbarten Hauptluftleitelementabschnitte derart gelenkig verbunden ist, dass eine Schwenkbewegung des klappenartigen Zusatzluftleitelements um eine in Längsrichtung des Fahrzeugs verlaufende Schwenkachse an die Verfahrbewegung der Hauptluftleitelementabschnitte quer zur Längsrichtung des Fahrzeugs und damit an die Verlagerung des Hauptluftleitelements von der Ruhestellung in die Betriebsstellung gekoppelt ist. Hierdurch ist die sich ausbildende Lücke flächenbündig schließbar.

Nach einer dritten, alternativen vorteilhaften Weiterbildung der Erfindung ist eine sich bei der Querverfahrung benachbarter Hauptluftleitelementabschnitte ausbildende Lücke durch ein Zusatzluftleitelement schließbar, welches klappenartig ausgebildet und mit beiden der benachbarten Hauptluftleitelementabschnitte derart gelenkig verbunden ist, dass eine Schwenkbewegung des klappenartigen Zusatzluftleitelements um eine quer zur Längsrichtung des Fahrzeugs verlaufende Schwenkachse an die Verfahrbewegung der Hauptluftleitelementabschnitte quer zur Längsrichtung des Fahrzeugs und damit an die Verlagerung des Hauptluftleitelements von der Ruhestellung in die Betriebsstellung gekoppelt ist. Hierdurch ist die sich ausbildende Lücke ebenfalls flächenbündig schließbar.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Heckbereich eines Fahrzeugs mit einer erfindungsgemäßen Luftleitvorrichtung nach einem ersten Ausführungsbeispiel der Erfindung in Ruhestellung in Draufsicht;
- Fig. 2: den Heckbereich der Fig. 1 mit der Luftleitvorrichtung in Betriebsstellung in einer Ansicht analog Fig. 1;
- Fig. 3: den Heckbereich der Fig. 1, 2 mit der Luftleitvorrichtung in Ruhestellung in Rückansicht;
- Fig. 4: den Heckbereich der Fig. 1, 2 mit der Luftleitvorrichtung in Betriebsstellung in einer Ansicht analog Fig. 3;
- Fig. 5: den Heckbereich der Fig. 1 bis 4 mit der Luftleitvorrichtung in Betriebsstellung in einer perspektivischen Ansicht von schräg hinten;
- Fig. 6: einen Ausschnitt aus dem Heckbereich der Fig. 1 bis 5 mit der Luftleitvorrichtung in Betriebsstellung in einer perspektivischen Ansicht von schräg vorne;
- Fig. 7: die Luftleitvorrichtung der Fig. 1 bis 6 in Ruhestellung;
- Fig. 8: die Luftleitvorrichtung der Fig. 7 in Betriebsstellung;
- Fig. 9: die Luftleitvorrichtung der Fig. 7 in Betriebsstellung;
- Fig. 10: einen schematisierten Querschnitt durch den Heckbereich der Fig. 1 bis 6 mit der Luftleitvorrichtung in Ruhestellung entlang der Schnittlinie X-X in Fig. 6;
- Fig. 11: den Querschnitt der Fig. 10 mit der Luftleitvorrichtung in Betriebsstellung;
- Fig. 12: einen alternativen schematisierten Querschnitt durch den Heckbereich der Fig. 1 bis 6 mit der Luftleitvorrichtung in Ruhestellung entlang der Schnittlinie X-X in Fig. 6;
- Fig. 13: den Querschnitt der Fig. 12 mit der Luftleitvorrichtung in Betriebsstellung;
- Fig. 14: einen weiteren alternativen schematisierten Querschnitt durch den Heckbereich der Fig. 1 bis 6 mit der Luftleitvorrichtung in Ruhestellung entlang der Schnittlinie X-X in Fig. 6;
- Fig. 15: den Querschnitt der Fig. 14 mit der Luftleitvorrichtung in Betriebsstellung;
- Fig. 16: eine erfindungsgemäße Luftleitvorrichtung nach einem zweiten Ausführungsbeispiel der Erfindung in Ruhestellung;
- Fig. 17: die Luftleitvorrichtung der Fig. 16 in Betriebsstellung;
- Fig. 18: die Luftleitvorrichtung der Fig. 16 in Betriebsstellung;
- Fig. 19: eine erfindungsgemäße Luftleitvorrichtung nach einem dritten Ausführungsbeispiel der Erfindung in Ruhestellung;
- Fig. 20: die Luftleitvorrichtung der Fig. 19 in Betriebsstellung; und
- Fig. 21: die Luftleitvorrichtung der Fig. 19 in Betriebsstellung.

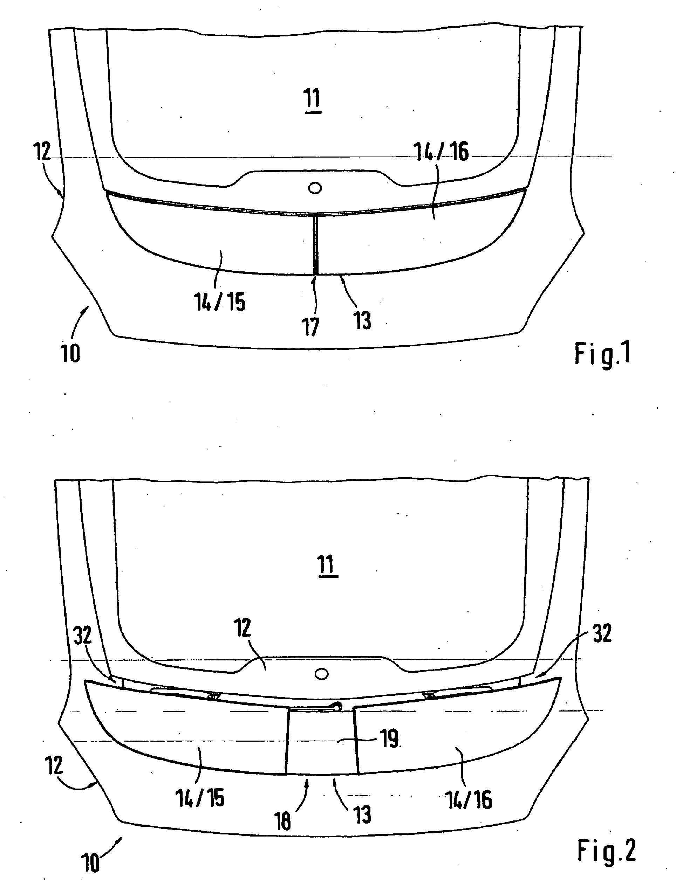

Fig. 1 bis 6 zeigen unterschiedliche Ansichten eines Heckbereichs 10 eines Fahrzeugaufbaus, wobei der Heckbereich 10 eine Heckscheibe 11 umfasst, die vorne, hinten sowie seitlich von einem Karosserieteil 12 umschlossen ist. In einem hinteren Bereich des Karosserieteils 12 des fließheckartig ausgebildeten Heckbereichs 10 und demnach unterhalb des Heckfensters 11 ist eine Luftleitvorrichtung 13 nach einem ersten Ausführungsbeispiel der Erfindung positioniert.

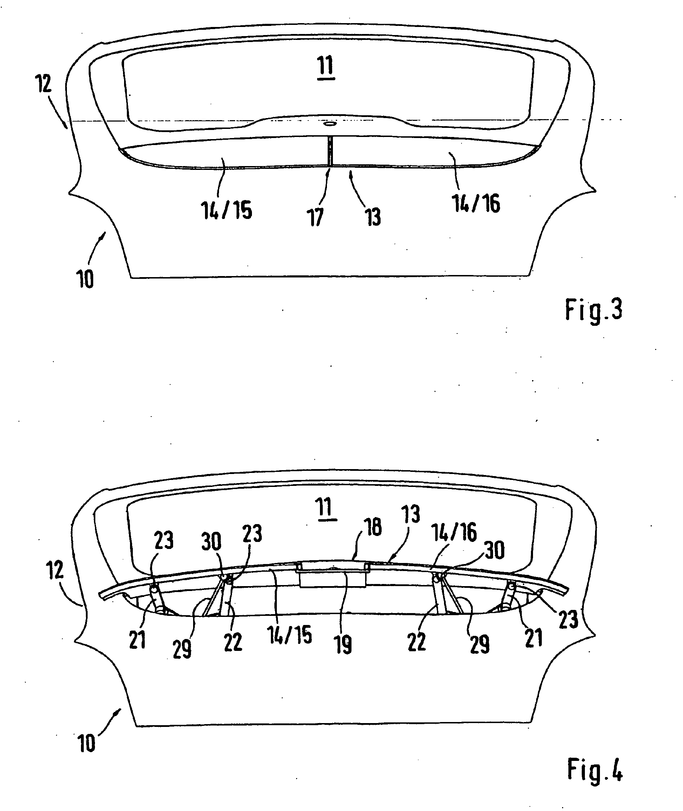

Die Fig. 1 und 3 zeigen die Luftleitvorrichtung 13 in einer Ruhestellung, die Fig. 2, 4, 5 und 6 zeigen die Luftleitvorrichtung 13 in einer Betriebsstellung.

In der Ruhestellung (siehe Fig. 1, 3) ist die Luftleitvorrichtung 13 oberflächenbündig in den Heckbereich 10 des Fahrzeugs integriert. In der Betriebsstellung (siehe Fig. 2, 4, 5, 6) hingegen ist die Luftleitvorrichtung 13 aus der Oberflächenkontur des Heckbereichs 10 heraus bewegt.

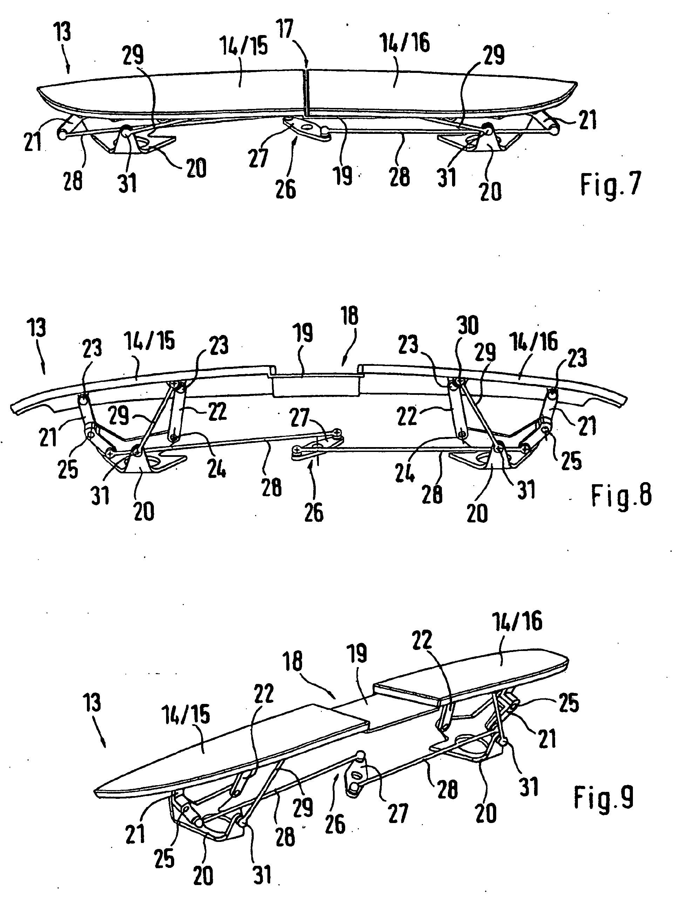

Die Luftleitvorrichtung 13 nach dem ersten Ausführungsbeispiel der Erfindung ist in den Fig. 7 bis 9 in Alleindarstellung gezeigt, nämlich gemäß Fig. 7 in Ruhestellung und gemäß Fig. 8, 9 in Betriebsstellung.

Die erfindungsgemäße Luftleitvorrichtung 13 der Fig. 1 bis 9 verfügt über ein Hauptluftleitelement 14, welches in Längsrichtung des Fahrzeugs gesehen unter Ausbildung von zwei Hauptluftleitelementabschnitten 15 und 16 mittig geteilt ist. In Ruhestellung der Luftleitvorrichtung 13 sind die Hauptluftleitelementabschnitte 15, 16 des Hauptluftleitelements 14 oberflächenbündig in den Formverlauf des Heckbereichs 10 des Fahrzeugs integriert, wobei dann die Hauptluftleitelementabschnitte 15 und 16 unter Bildung einer Trennfuge 17 aneinander angrenzen bzw. aneinander stoßen.

Das Hauptluftleitelement 14 ist derart in die beiden Hauptluftleitelementabschnitte 15 und 16 geteilt, dass bei der Verlagerung des Hauptluftleitelements 14 von der Ruhestellung gemäß Fig. 1, 3 in die Betriebsstellung gemäß Fig. 2, 4, 5, 6 die beiden Hauptluftleitelementabschnitte 15 und 16 quer zur Längsrichtung des Fahrzeugs verfahrbar sind. Die Verfahrbewegung der seitlichen Hauptluftleitelementabschnitte 15 und 16 des Hauptluftleitelements 14 quer zur Längsrichtung des Fahrzeugs ist dabei an die Verlagerung des Hauptluftleitelements 14 bzw. der Hauptluftleitelementabschnitte 15 und 16 von der Ruhestellung in die Betriebsstellung gekoppelt, nämlich derart, dass simultan bzw. gleichzeitig mit der Verfahrbewegung der seitlichen Hauptluftleitelementabschnitte 15 und 16 quer zur Längsrichtung des Fahrzeugs dieselben aus dem Formverlauf des Heckbereichs 10 heraus schwenkbar sind.

Einem Vergleich der Fig. 1 und 2 kann dabei unmittelbar entnommen werden, dass bei der Verlagerung des Hauptluftleitelements 14 bzw. der Hauptluftleitelementabschnitte 15 und 16 von der Ruhestellung in die Betriebsstellung die Quererstreckung der erfindungsgemäßen Luftleitvorrichtung 13 vergrößert wird und dieselbe nach hinten verlagert wird.

Bei der Verfahrbewegung der Hauptluftleitelementabschnitte 15 und 16 des Hauptluftleitelements 14 quer zur Längsrichtung des Fahrzeugs vergrößert sich der Abstand derselben quer zur Längsrichtung des Fahrzeugs, so dass sich die Trennfuge 17 zwischen den beiden Hauptluftleitelementabschnitten 15 und 16, die in Ruhestellung (siehe Fig. 1, 3) des Hauptluftleitelements 14 minimale Abmessungen aufweist, vergrößert. Dabei bildet sich eine Lücke 18 zwischen den beiden Hauptluftleitelementabschnitten 15 und 16 aus, die durch ein Zusatzluftleitelement 19 verschließbar ist.

Im Ausführungsbeispiel der Fig. 1 bis 9 ist das Zusatzluftleitelement 19 integraler Bestandteil des Hauptluftleitelementabschnitts 15, wobei in Ruhestellung des Hauptluftleitelements 14 das Zusatzluftleitelement 19 des Hauptluftleitelementabschnitts 15 unter den Hauptluftleitelementabschnitt 16 (siehe Fig. 7) geschoben ist. Erst dann, wenn die Hauptluftleitelementabschnitte 15 und 16 quer zur Längsrichtung des Fahrzeugs unter Vergrößerung der Quererstreckung der Luftleitvorrichtung 13 auseinander bewegt werden, wird das Zusatzluftleitelement 19 sichtbar, wobei im Ausführungsbeispiel der Fig. 1 bis 9 ein Höhenversatz zwischen dem Zusatzluftleitelement 19 und den beiden Hauptluftleitelementabschnitten 15 und 16 bestehen bleibt. Das Zusatzluftleitelement 19 schließt demnach in diesem Fall die Lücke 18 nicht flächenbündig ab.

Die Luftleitvorrichtung 13 ist über zwei Montagefüße 20 mit dem Karosserieteil 12 des Heckbereichs 10 des Fahrzeugs verbunden bzw. über die Montagefüße 20 am Karosserieteil 12 montiert. An Stelle der beiden Montagefüße 20 kann auch eine durchgehende Montageplatte verwendet werden. Beide Hauptluftleitelementabschnitte 15 und 16 des Hauptluftelements 14 ist ein derartiger Montagefuß 20 oder eine gemeinsame Montageplatte zugeordnet. Jeder der beiden Hauptluftleitelementabschnitte 15 und 16 ist an einem vorderen Ende derselben über zwei Betätigungselemente 21 und 22 mit dem Karosserieteil 12 bzw. den Montagefüßen 20 oder der Montageplatte verbunden. Die Betätigungselemente 21, 22 werden nachfolgend als Betätigungsstangen bezeichnet. Die Betätigungselemente 21, 22 können auch als Betätigungslenker bezeichnet werden.

Jede der Betätigungsstangen 21, 22 eines Hauptluftleitelementabschnitts 15, 16 ist mit einem ersten Abschnitt gelenkig mit dem Montagefuß 20 und mit einem zweiten Abschnitt gelenkig mit dem jeweiligen Hauptluftleitelementabschnitt 14 bzw. 15 verbunden.

So kann insbesondere Fig. 8 entnommen werden, dass beide Betätigungsstangen 21 und 22 an Enden über jeweils ein Gelenk 23 mit dem jeweiligen Hauptluftleitelementabschnitt 15 bzw. 16 verbunden sind, wobei diese Gelenke 23 als Kugelgelenke ausgeführt sind. Die Betätigungsstangen 22 sind über ein Gelenk 24, insbesondere ein Drehgelenk, am gegenüberliegenden Ende mit dem jeweiligen Montagefuß 20 verbunden. Die Betätigungsstangen 21 hingegen sind an einem Mittelabschnitt über ein Gelenk 25, insbesondere ein Drehgelenk, mit dem jeweiligen Montagefuß 20 gelenkig verbunden.

Die Betätigungsstangen 21 sind von einem nicht-dargestellten Antriebsmotor aus antreibbar, nämlich mit Hilfe eines Antriebsgestänges 26. Das Antriebsgestänge 26 verfügt über ein Mittelstück 27, wobei am Mittelstück 27 Antriebsstangen 28 gelenkig angreifen. Die Antriebsstangen 28 sind mit den Betätigungsstangen 21 gelenkig verbunden, nämlich an den noch freien Enden derselben. Der nicht-dargestellte Antriebsmotor kann das Mittelstück 21 verdrehen und dadurch über die Antriebsstangen 28 die Betätigungsstangen 21 verdrehen, wodurch letztendlich die beiden Hauptluftleitelementabschnitt 15 und 16 des Hauptluftleitelements 14 quer zur Längsrichtung des Kraftfahrzeugs relativ zueinander bewegt werden. Alternativ kann das Antriebsgestänge 26 auch an den Betätigungsstangen 22 angreifen.

Neben den Betätigungselementen bzw. den Betätigungsstangen 21 und 22 greift an den Hauptluftleitelementabschnitten 15 und 16 weiterhin jeweils ein Kopplungselement 29 an. Das Kopplungselement 29 wird nachfolgend als Kopplungsstange bezeichnet. Das Kopplungselement 29 kann auch als Kopplungslenker bezeichnet werden.

Jede der Kopplungsstangen 29 ist über ein Gelenk 30 mit dem jeweiligen Hauptluftleitelementabschnitt 15 bzw. 16 verbunden, wobei die Kopplungsstangen 29 über ein weiteres Gelenk 31 am Karosserieteil 12, nämlich am Montagefuß 20 des Karosserieteils 12, angreifen. Die Gelenke 30, 31 sind vorzugsweise Kugelgelenke. Die Kopplungsstangen 29 greifen an einem hinteren Ende der Hauptluftleitelementabschnitte 15, 16 an denselben an und sorgen dann, wenn die Hauptluftleitelementabschnitte 15 und 16 quer zur Längsrichtung des Kraftfahrzeugs auseinander bewegt werden, für eine gleichzeitige bzw. simultane bzw. überlagerte Schwenkbewegung derselben in eine angehobene Stellung, so dass dieselben aus dem Formverlauf des Heckbereichs 10 nach oben heraus bewegt werden.

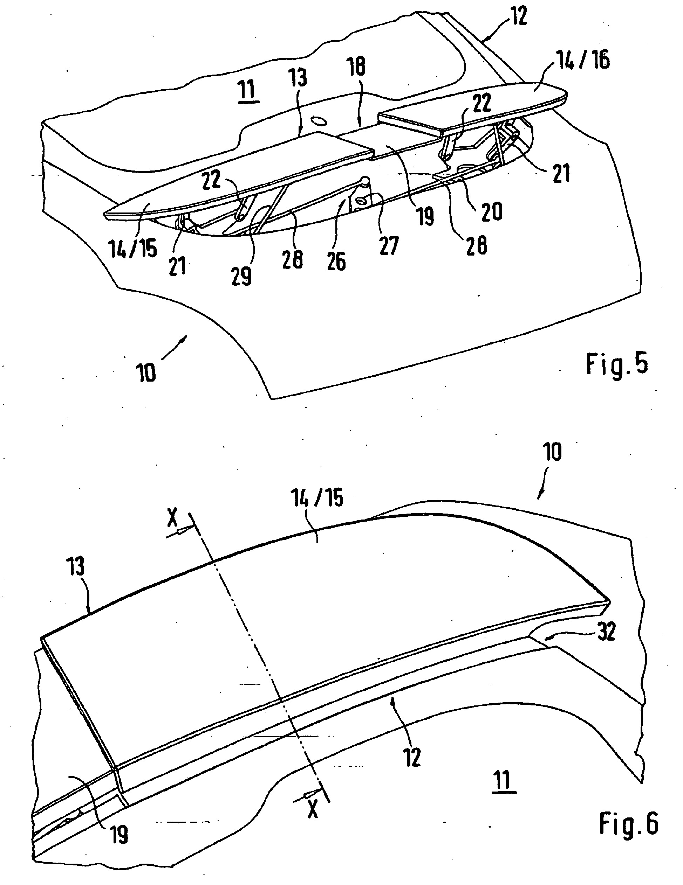

Dann, wenn die Luftleitvorrichtung 13, wie oben beschrieben, aus der Ruhestellung in die Betriebsstellung verfahren bzw. verlagert wird, bildet sich, wie am besten Fig. 6 entnommen werden kann, zwischen dem Karosserieabschnitt 12 und einem vorderen Ende des Hauptluftleitelements 14 eine Lücke 32 aus, die aus aerodynamischer Sicht zu verschließen ist.

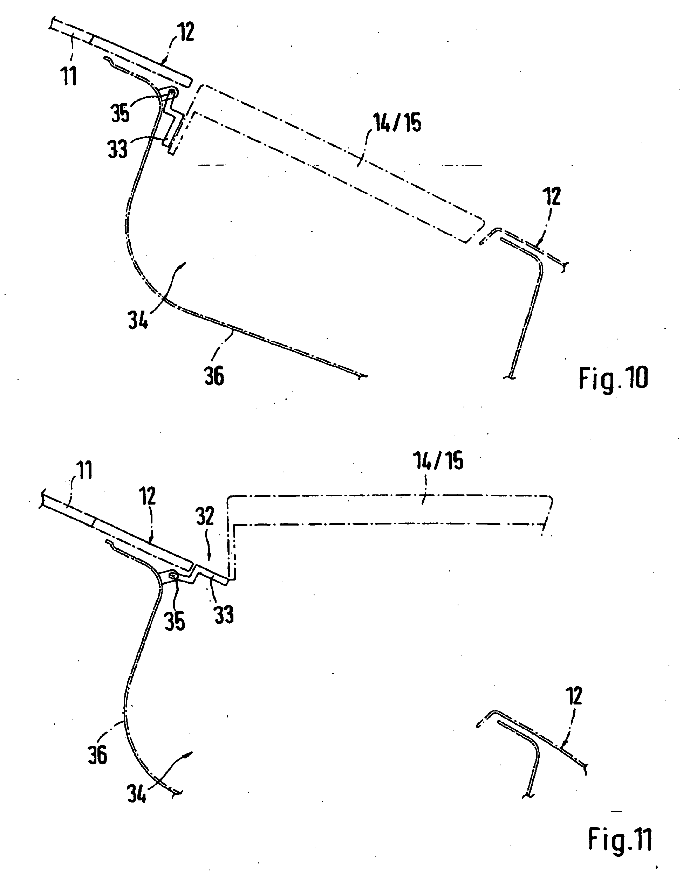

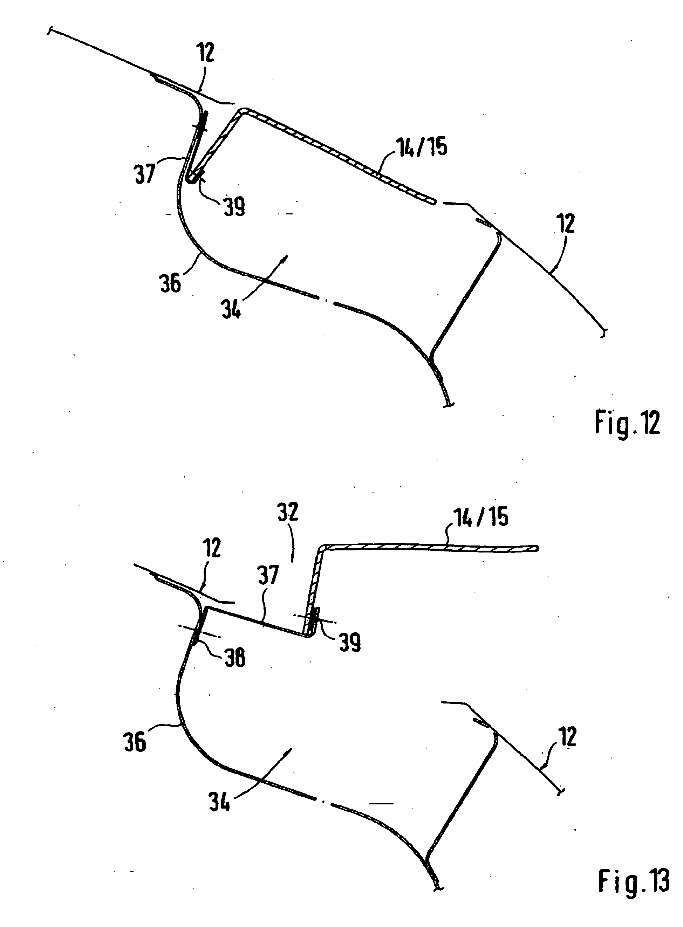

Hierzu kann das in den Fig. 10 und 11 gezeigte Verschlusselement 33 dienen, welches gemäß Fig. 10 und 11 als verschwenkbare Klappe ausgebildet. Dann, wenn die Luftleitvorrichtung 13 bzw. das Hauptluftleitelement 14 in die Betriebsstellung (siehe Fig. 11) verfahren ist, ist das Verschlusselement 33 nach oben verschwenkt, um die Lücke 32 zu verschließen. Dann hingegen, wenn das Hauptluftleitelement 14 in die Betriebsstellung(siehe Fig. 12) verfahren ist, ist das Verschlusselement 33 in einen Aufnahmeraum 34 für die Luftleitvorrichtung 13 hinein geklappt. Gemäß Fig. 10 und 11 ist hierzu das klappenartige Verschlusselement 33 über ein Gelenk 35 mit einer den Aufnahmeraum 34 begrenzenden Wand 36 verbunden.

Eine alternative Ausführungsform eines Verschlusselements 37 für die Lücke 32 zwischen dem vorderen Ende der Luftleitvorrichtung 13 und dem Karosserieabschnitt 12 zeigen Fig. 12 und 13, wobei in Fig. 12 und 13 das Verschlusselement 37 als flexibler Verschlussstreifen aus einem Textilmaterial oder einem gummiartigem Material ausgebildet ist. Der flexible Verschlussstreifen 37 ist mit der den Aufnahmeraum 34 begrenzenden Wand 36 an einem Abschnitt 38 fest verbunden. Mit einem gegenüberliegenden Abschnitt 39 liegt das Verschlusselement 37 am Hauptluftleitelement 14 an, um hier eine Relativbewegung zwischen dem Verschlusselement 37 und dem Hauptluftleitelement 14, nämlich den Hauptluftleitelementabschnitten 15 und 16 desselben, zu gewährleisten.

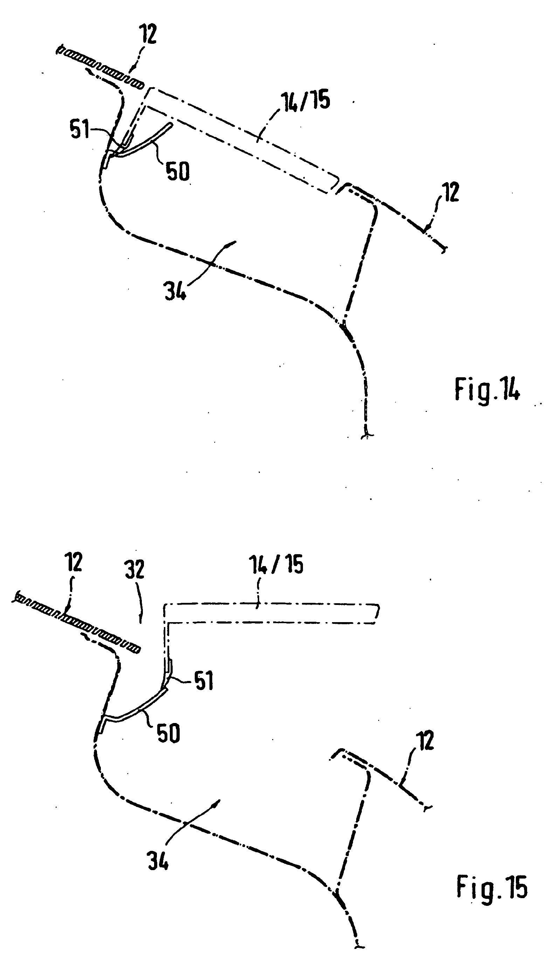

Eine alternative Ausführungsform eines Verschlusselements 50 für die Lücke 32 zwischen dem vorderen Ende der Luftleitvorrichtung 13 und dem Karosserieabschnitt 12 zeigen Fig. 14 und 15, wobei in Fig. 14 und 15 das Verschlusselement 50 als karosseriefestes Element ausgeführt ist, welches mit einer den Hauptluftleitelementabschnitten 15 und 16 zugeordneten Dichtlippe 51 zusammenwirkt. In jeder Position der Hauptluftleitelementabschnitte 15 und 16 liegt die Dichtlippe am karosseriefesten Verschlusselement 50 zur Abdichtung der Lücke 32 an.

Im Unterscheid zum obigen Ausführungsbeispiel ist es möglich, die Hauptluftleitelementabschnitte 15 und 16 über eine Linearführung zu koppeln. In diesem Fall kann dann an einem der Hauptluftleitelementabschnitte 15 und 16 auf die Betätigungselemente 21 und 22 und gegebenenfalls das Koppelelement 29 verzichtet werden.

In dem Fall, in welchem eine einfachere Kinematik zur Verstellung der Luftleitvorrichtung zulässig ist, kann gegebenenfalls komplett auf die Koppelelemente 29 verzichtet werden. Gegebenenfalls können gar die als Kugelgelenke ausgebildeten Gelenke 23 im Bereich der Betätigungselemente 21 und/oder 22 durch Drehgelenke ersetzt werden.

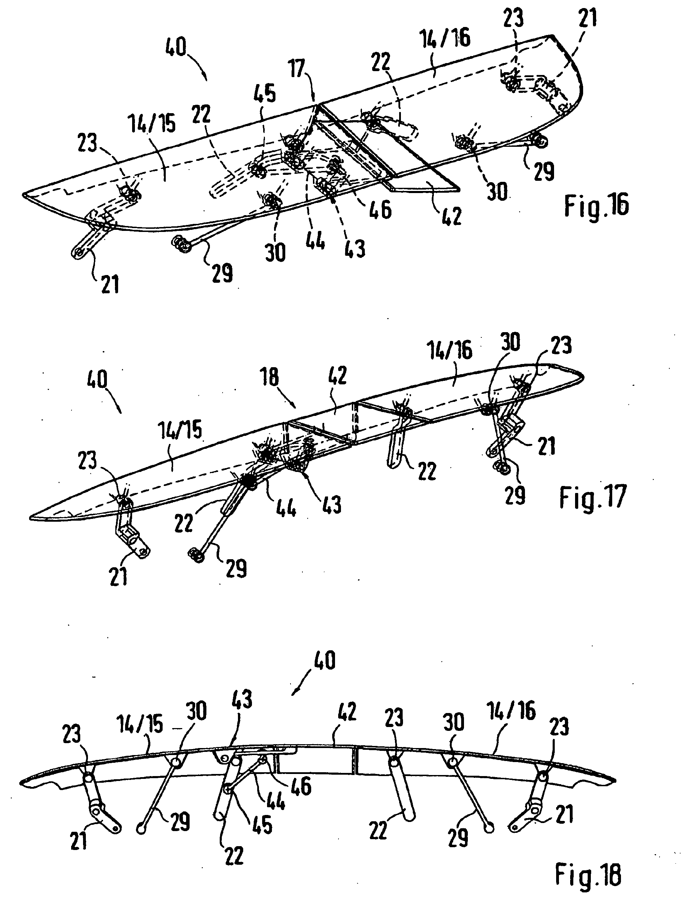

Nachfolgend werden unter Bezugnahme auf Fig. 16 bis 18 sowie 19 bis 21 zwei weitere Ausführungsbeispiele erfindungsgemäßer Luftleitvorrichtungen 40 und 41 beschrieben, wobei sich die Luftleitvorrichtungen 40 bzw. 41 von der Luftleitvorrichtung 13 des Ausführungsbeispiels der Fig. 1 bis 9 lediglich durch die Ausgestaltung des Zusatzluftleitelements unterscheiden, so dass hier zur Vermeidung unnötiger Wiederholungen für gleiche Baugruppen gleiche Bezugsziffern verwendet werden, und nachfolgend nur auf die Details eingegangen wird, durch die sich die Ausführungsbeispiele der Fig. 16 bis 18 sowie 19 bis 21 vom Ausführungsbeispiel der Fig. 1 bis 9 unterscheiden. Dabei sei angemerkt, dass in den Darstellungen der Fig. 16 bis 21 die Montagefüße 20 sowie das Antriebsgestänge 26 aus Gründen einer einfacheren Darstellung nicht gezeigt sind.

Die Luftleitvorrichtung 40 des Ausführungsbeispiel der Fig. 16 bis 19 weist neben den beiden Hauptluftleitelementabschnitten 15 und 16 ein klappenartig ausgebildetes Zusatzluftleitelement 42 auf, welches mit dem Hauptluftleitelementabschnitt 15 des Hauptluftleitelements 14 über ein Scharnier 43 einseitig gelenkig verbunden ist. Das Scharnier 43 definiert eine Schwenkachse für das klappenartige Zusatzluftleitelement 42, wobei diese Schwenkachse in Längsrichtung des Kraftfahrzeugs verläuft.

Bei der Überführung der Luftleitvorrichtung 40 von der Ruhestellung (siehe Fig. 16) in die Betriebsstellung (siehe Fig. 17, 18) unter Querverfahrung der Hauptluftleitelementabschnitte 15 und 16 und unter gleichzeitiger bzw. simultaner Verschwenkung derselben in eine angehobene Position ist das klappenartige Zusatzluftleitelement 42 um diese Schwenkachse des Scharniers 43 von einer Position unterhalb der Hauptluftleitelementabschnitte 15 und 16 in eine Position verschwenkbar, in welcher das Zusatzluftleitelement 42 die durch Querverfahrung der Hauptluftleitelementabschnitte 15 und 16 ausgebildete Lücke 18 flächenbündig verschließt. Über ein Kopplungselement 44, welches einerseits über ein Gelenk 45 an der Betätigungsstange 22 des Hauptluftleitelementabschnitts 15 und andererseits über ein Gelenk 46 am Scharnier 43 des Zusatzluftleitelements 42 angreift, ist die Schwenkbewegung des Zusatzluftleitelements 42 bei der Überführung desselben von der Ruhestellung in die Betriebsstellung an die Querverfahrung der Hauptluftleitelementabschnitte 15 und 16 quer zur Längsrichtung des Fahrzeugs derart gekoppelt, dass diese Bewegungen gleichzeitig bzw. simultan erfolgen. Das Kopplungselement 44 kann auch als Kopplungsstange bzw. Kopplungslenker bezeichnet werden.

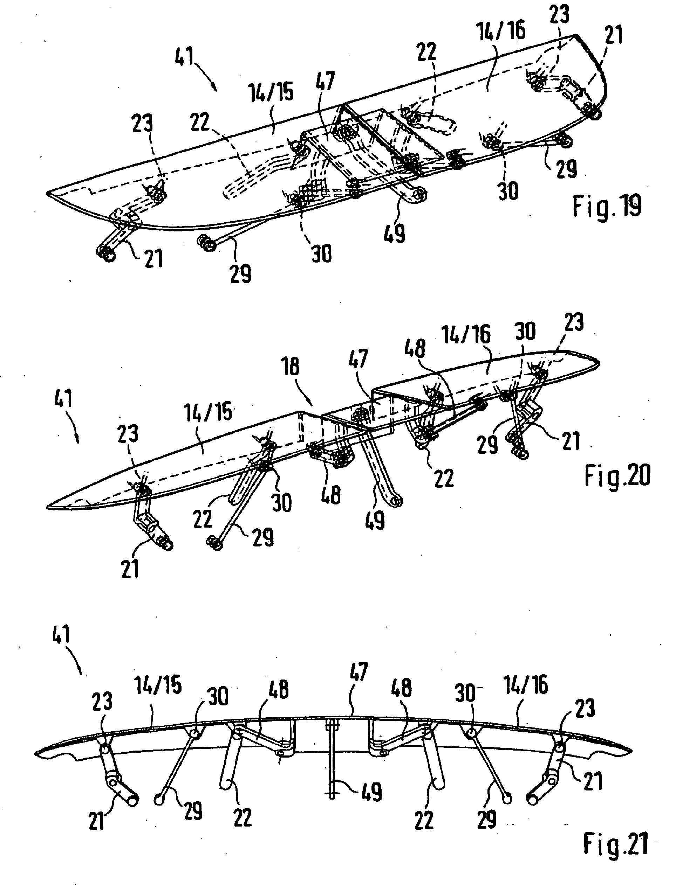

Bei der Luftleitvorrichtung 41 der Fig. 19 bis 21 ist ein Zusatzluftleitelement 47 beidseitig über jeweils ein Kopplungselement 48 an beiden Hauptluftleitelementabschnitten 15 und 16 angebunden. Bei der Überführung von der Ruhestellung (siehe Fig. 19) in die Betriebsstellung (siehe Fig. 20, 21) wird das Zusatzluftleitelement 47 um eine Schwenkachse, die quer zur Längsrichtung des Fahrzeugs verläuft, von einer Position unterhalb der Hauptluftleitelementabschnitte 15 und 16 nach oben geschwenkt, so dass das Zusatzluftleitelement 47 die Lücke 18 zwischen den Hauptluftleitelementabschnitten 15 und 16, die bei der Querverfahrung der Hauptluftleitelementabschnitte 15 und 16 entsteht, flächenbündig abschließt. Das Schwenken des Zusatzluftleitelements 47 erfolgt über ein weiteres Kopplungselement 49, welches einerseits mit dem Zusatzluftleitelement 47 und andererseits mit dem Karosserieteil 12 gelenkig verbunden ist. Die Kopplungselemente 48, 29 können auch als Kopplungsstangen bzw. Kopplungslenker bezeichnet werden.

Die beidseitige Anbindung des klappenartigen Zusatzluftleitelements 47 an beide Hauptluftleitelementabschnitte 15, 16 gemäß Fig. 19 bis 21 verfügt gegenüber der einseitigen Anbindung gemäß Fig. 16 bis 18 über den Vorteil, dass das Zusatzluftleitelement steifer angebunden ist und Toleranzen zu den Hauptluftleitelementabschnitten geringer ausfallen.

Bei den erfindungsgemäßen Luftleitvorrichtungen 13, 40 und 41 ist ein einziger Antrieb ausreichend, um sämtliche Elemente der Luftleitvorrichtungen, nämlich die Hauptluftleitelementabschnitte 15 und 16 des Hauptluftleitelements 14 sowie das Zusatzluftleitelement 19 bzw. 42 bzw. 47 von der Ruhestellung in die Betriebsstellung bzw. von der Betriebsstellung in die Ruhestellung zu überführen. Das von einem Antriebsmotor bereitgestellte Antriebsmoment wird über das Antriebsgestänge 26 auf die Betätigungselemente 21 übertragen, die mit den Hauptluftleitelementabschnitten 15 und 16 des Hauptluftleitelements 14 gelenkig verbunden sind. Hierdurch können die Hauptluftleitelementabschnitte 15 und 16 quer zur Längsrichtung des Fahrzeugs verschoben werden, wobei über Koppelungselemente 29, die ebenfalls an den Hauptluftleitelementabschnitten 15 und 16 angreifen, dieselben simultan bzw. gleichzeitig nach oben geschwenkt werden.

In dem Fall, in welchem das Zusatzluftleitelement 42 bzw. 47 als separate Baugruppe (Fig. 16 bis 18 bzw. 19 bis 21) ausgebildet ist, sind weitere Koppelungselemente vorhanden, um auch die Bewegung des Zusatzluftleitelements simultan bzw. gleichzeitig mit der Bewegung der Hauptluftleitelementabschnitte 15 und 16 des Hauptluftleitelements 14 auszuführen.

Obwohl in Fig. 1 bis 21 nicht dargestellt, kann das Hauptluftleitelement 14 auch in mehr als zwei Hauptluftleitelementabschnitte, z. B. in drei Hauptluftleitelementabschnitte, geteilt sein, wobei dann die beiden äußeren Hauptluftleitelementabschnitte, wie oben beschrieben, von einer Ruhestellung in eine Betriebsstellung bzw. umgekehrt überführbar sind, und wobei ein drittes, mittleres Hauptluftleitelement dann vorzugsweise ortsfest ausgeführt ist. Zwischen dem mittleren Hauptluftleitelement und den beiden seitlichen, verfahrbaren Hauptluftleitelementabschnitten kommen dann zum Schließen von Lücken, die bei Querverfahrung der seitlichen Hauptluftleitelementabschnitte zwischen denselben und dem mittleren Hauptluftleitelementabschnitt entstehen, Zusatzluftleitelemente zum Einsatz, die wie in den Ausführungsbeispielen 1 bis 21 beschrieben, ausgebildet sein können.

## Patentansprüche

1. Luftleitvorrichtung (13, 40, 41) für ein Fahrzeug, insbesondere für ein Personenkraftfahrzeug, die in einem Heckbereich (10) des Fahrzeugs angeordnet ist und ein Hauptiuftleitelement (14) umfasst, welches von einer eingefahrenen Ruhestellung in eine ausgefahrene Betriebsstellung verlagerbar ist, wobei das Hauptluftleitelement (14) in Längsrichtung des Fahrzeugs gesehen unter Ausbildung von mindestens zwei Hauptluftleitelementabschnitten (15, 16) derart geteilt ist, dass bei der Verlagerung des Hauptluftleitelements (14) von der Ruhestellung in die Betriebsstellung zumindest seitliche Hauptluftleitelementabschnitte (15, 16) quer zur Längsrichtung des Fahrzeugs verfahrbar sind, **dadurch gekennzeichnet, dass** das Hauptluftleitelement (14) in etwa mittig in die zwei Hauptluftleitetementabschnitte (15, 16) geteilt ist.

2. Luftleitvorrichtung nach Anspruch 1, **dadurch gekennzeichnet, dass** die Verfahrbewegung der seitlichen Hauptluftleitelementabschnitte (15, 16) quer zur Längsrichtung des Fahrzeugs an die Verlagerung des Hauptluftleitelements (14) von der Ruhestellung in die Betriebsstellung gekoppelt ist.

3. Luftleitvorrichtung nach Anspruch 1 oder 2, **dadurch gekennzeichnet, dass** das Hauptluftleitelement (14) bei der Verlagerung von der Ruhestellung, in welcher dasselbe in einen Formverlauf des Heckbereichs (10) integriert ist, in die Betriebsstellung aus dem Formverlauf des Heckbereichs heraus schwenkbar ist, und dass simultan bzw. gleichzeitig hierzu zumindest die seitlichen Hauptluftleitelementabschnitte (15, 16) quer zur Längsrichtung des Fahrzeugs unter Vergrößerung der Quererstreckung der Luftleitvorrichtung verfahrbar sind.

4. Luftleitvorrichtung nach einem oder mehreren der Ansprüche 1 bis 3, **dadurch gekennzeichnet, dass** eine sich bei der Querverfahrung benachbarter Hauptluftleitelementabschnitte (15, 16) ausbildende Lücke (18) durch ein Zusatzluftleitelement (19; 42; 47) schließbar ist.

5. Luftleitvorrichtung nach Anspruch 4, **dadurch gekennzeichnet, dass** das Zusatzlufdeitelement (19) in einen der benachbarten Hauptluftleitelementabschnitte (15) integriert ist.

6. Luftleitvorrichtung nach Anspruch 4, **dadurch gekennzeichnet, dass** das Zusatzluftleitelement (42) klappenartig ausgebildet und mit einem der benachbarten Haupduftleitelementabschnitte (15) derart gelenkig verbunden ist, dass eine Schwenkbewegung des klappenartigen Zusatzluftleitelements (42) um eine in Längsrichtung des Fahrzeugs verlaufende Schwenkachse an die Verfahrbewegung der Hauptluftleitelementabschnitte (15, 16) quer zur Längsrichtung des Fahrzeugs und damit an die Verlagerung des Hauptlufdeiteiements (14) von der Ruhestellung in die Betriebsstellung gekoppelt ist.

7. Luftleitvorrichtung nach Anspruch 4, **dadurch gekennzeichnet, dass** das Zusatzluftleitelement (47) klappenartig ausgebildet und mit beiden der benachbarten Haupduftleitelementabschnitte (15, 16) derart gelenkig verbunden ist, dass eine Schwenkbewegung des klappenartigen Zusatzluftleitelements (47) um eine quer zur Längsrichtung des Fahrzeugs verlaufende Schwenkachse an die Verfahrbewegung der Haupduftleitelementabschnitte (15, 16) quer zur Längsrichtung des Fahrzeugs und damit an die Verlagerung des Hauptlufdeitelements (14) von der Ruhestellung in die Betriebsstellung gekoppelt ist.

8. Luftleitvorrichtung nach einem oder mehreren der Ansprüche 1 bis 7, **dadurch gekennzeichnet, dass** jeder Hauptluftleitelementabschnitt (15, 16) über vorzugsweise zwei Betätigungselemente (21, 22) mit einem Karosserieteil (12) bzw. einem karosserieseitigen Montagefuß (20) oder eine Montageplatte verbunden ist, wobei jedes der Betätigungselemente (21, 22) mit einem ersten Abschnitt gelenkig mit dem Karosserieteil bzw. Montagefuß (20) oder der Montageplatte und mit einem zweiten Abschnitt gelenkig mit dem jeweiligen Haupduftleitelementabschnitt (15, 16) verbunden ist.

9. Luftleitvorrichtung nach Anspruch 8, **dadurch gekennzeichnet, dass** die Betätigungselemente (21, 22) mit ihren zweiten Abschnitten über Kugelgelenke (23) mit dem jeweiligen Hauptluftieitelementabschnitt (15, 16) an einem vorderen Ende desselben verbunden ist.

10. Luftleitvorrichtung nach Anspruch 8 oder 9, **dadurch gekennzeichnet, dass** jeweils eines der an dem jeweiligen Hauptluftleitelementabschnitt angreifenden Betätigungselemente (21) über einen Antriebsmotor antreibbar ist, wobei die angetriebenen Betätigungselemente (21) der Hauptluftleitelementabschnitte (15, 16) über ein Antriebsgestänge (26) verbunden sind.

11. Luftleitvorrichtung nach einem oder mehreren der Ansprüche 1 bis 10, **dadurch gekennzeichnet, dass** jeder Hauptluftleitelementabschnitt (15, 16) über vorzugsweise ein Kopplungselement (29) mit einem Karosserieteil (12) bzw. einem karosserieseitigen Montagefuß (20) verbunden ist, wobei jedes Kopplungselement (29) mit einem ersten Ende gelenkig mit dem Karosserieteil bzw. dem Montagefuß und mit dem zweiten Ende gelenkig mit dem jeweiligen Hauptluftleitelementabschnitt (15, 16) verbunden ist.

12. Luftleitvorrichtung nach Anspruch 11, **dadurch gekennzeichnet, dass** die Kopplungselemente (29) mit ihren zweiten Enden an dem jeweiligen Hauptiuftleitelementabschnitt (15, 16) an einem hinteren Ende desselben angreifen.

13. Luftleitvorrichtung nach einem oder mehreren der Ansprüche 1 bis 12, **dadurch gekennzeichnet, dass** eine sich bei der Verlagerung des Hauptluftleitelements (14) von der Ruhestellung in die Betriebsstellung ausbildende Lücke (32) zwischen dem Karosserieteil (12) und einem vorderen Ende des Hauptlufdeitelements (14) durch ein Verschlusselement (33; 37; 50) verschließbar ist.

14. Luftleitvorrichtung nach Anspruch 13, **dadurch gekennzeichnet, dass** das Verschlusselement (33) als Klappe ausgebildet ist, oder dass das Verschlusselement (37) als flexibler Verschlussstreifen ausgebildet ist, oder dass das Verschlusselement (50) als karosseriefestes Element ausgebildet ist.

## Claims

1. Air-guiding device (13, 40, 41) for a vehicle, in particular for a passenger motor vehicle, which air-guiding device is arranged in a rear region (10) of the vehicle and comprises a main air-guiding element (14) which can be moved from a retracted rest position into a deployed operating position, with the main air-guiding element (14) being split as viewed in the longitudinal direction of the vehicle so as to form at least two main air-guiding element sections (15, 16), in such a way that, during the movement of the main air-guiding element (14) from the rest position into the operating position, at least lateral main air-guiding element sections (15, 16) can be moved transversely with respect to the longitudinal direction of the vehicle, **characterized in that** the main air-guiding element (14) is split approximately centrally into the two main air-guiding element sections (15, 16).

2. Air-guiding device according to Claim 1, **characterized in that** the movement of the lateral main air-guiding element sections (15, 16) transversely with respect to the longitudinal direction of the vehicle is coupled to the movement of the main air-guiding element (14) from the rest position into the operating position.

3. Air-guiding device according to Claim 1 or 2, **characterized in that** the main air-guiding element (14) can be pivoted out of a profile of the rear region (10) during the movement from the rest position, in which said main air-guiding element is integrated into the profile of the rear region, into the operating position, and **in that** simultaneously or at the same time, at least the lateral main air-guiding element sections (15, 16) can be moved transversely with respect to the longitudinal direction of the vehicle so as to increase the transverse extent of the air-guiding device.

4. Air-guiding device according to one or more of Claims 1 to 3, **characterized in that** a gap (18) which is formed during the transverse movement of adjacent main air-guiding element sections (15, 16) can be closed off by an additional air-guiding element (19; 42; 47).

5. Air-guiding device according to Claim 4, **characterized in that** the additional air-guiding element (19) is integrated into one of the adjacent main air-guiding element sections (15).

6. Air-guiding device according to Claim 4, **characterized in that** the additional air-guiding element (42) is designed in the manner of a flap and is articulatedly connected to one of the adjacent main air-guiding element sections (15) in such a way that a pivoting movement of the flap-like additional air-guiding element (42) about a pivot axis running in the longitudinal direction of the vehicle is coupled to the movement of the main air-guiding element sections (15, 16) transversely to the longitudinal direction of the vehicle, and is therefore coupled to the movement of the main air-guiding element (14) from the rest position into the operating position.

7. Air-guiding device according to Claim 4, **characterized in that** the additional air-guiding element (47) is designed in the manner of a flap and is articulatedly connected to both of the adjacent main air-guiding element sections (15, 16) such that a pivoting movement of the flap-like additional air-guiding element (47) about a pivot axis running transversely to the longitudinal direction of the vehicle is coupled to the movement of the main air-guiding element sections (15, 16) transversely to the longitudinal direction of the vehicle, and is therefore coupled to the movement of the main air-guiding element (14) from the rest position into the operating position.

8. Air-guiding device according to one or more of Claims 1 to 7, **characterized in that** each main air-guiding element section (15, 16) is connected via preferably two actuating elements (21, 22) to a body part (12) or a body-side mounting base (20) or a mounting plate, with each of the actuating elements (21, 22) being articulatedly connected with a first section to the body part or mounting base (20) or the mounting plate and being articulatedly connected with a second section to the respective main air-guiding element section (15, 16).

9. Air-guiding device according to Claim 8, **characterized in that** the actuating elements (21, 22) are connected with their second sections via ball joints (23) to the respective main air-guiding element section (15, 16) at a front end of the latter.

10. Air-guiding device according to Claim 8 or 9, **characterized in that** in each case one of the actuating elements (21) which engage on the respective main air-guiding element section can be driven by a drive motor, with the driven actuating elements (21) being connected to the main air-guiding element sections (15, 16) via a drive linkage (26).

11. Air-guiding device according to one or more of Claims 1 to 10, **characterized in that** each main air-guiding element section (15, 16) is connected via preferably a coupling element (29) to a body part (12) or a body-side mounting base (20), with each coupling element (29) being articulatedly connected with a first end to the body part or the mounting base and articulatedly connected with a second end to the respective main air-guiding element section (15, 16).

12. Air-guiding device according to Claim 11, **characterized in that** the coupling elements (29) engage with their second ends on the respective main air-guiding element section (15, 16) at a rear end of the latter.

13. Air-guiding device according to one or more of Claims 1 to 12, **characterized in that** a gap (32) which is formed between the body part (12) and a front end of the main air-guiding element (14) during the movement of the main air-guiding element (14) from the rest position into the operating position can be closed off by a closure element (33; 37; 50).

14. Air-guiding device according to Claim 13, **characterized in that** the closure element (33) is designed as a flap, or **in that** the closure element (37) is designed as a flexible closure strip, or **in that** the closure element (50) is designed as an element which is fixed with respect to the body.

## Revendications

1. Dispositif de guidage d'air (13, 40, 41) pour un véhicule, notamment pour un véhicule automobile léger, qui est disposé dans une région arrière (10) du véhicule, et qui comprend un élément de guidage d'air principal (14), qui peut être déplacé d'une position de repos rentrée à une position de fonctionnement sortie, l'élément de guidage d'air principal (14), vu dans la direction longitudinale du véhicule, étant divisé en formant au moins deux portions d'élément de guidage d'air principal (15, 16) de telle sorte que dans le cas d'un décalage de l'élément de guidage d'air principal (14) de la position de repos vers la position de fonctionnement, au moins des portions latérales d'élément de guidage d'air principal (15, 16) puissent être déplacées transversalement à la direction longitudinale du véhicule, **caractérisé en ce que** l'élément de guidage d'air principal (14) est divisé approximativement centralement en les deux portions d'élément de guidage d'air principal (15, 16).

2. Dispositif de guidage d'air selon la revendication 1, **caractérisé en ce que** le mouvement de déplacement des portions latérales d'élément de guidage d'air principal (15, 16) transversalement à la direction longitudinale du véhicule est accouplé au décalage de l'élément de guidage d'air principal (14) de la position de repos vers la position de fonctionnement.

3. Dispositif de guidage d'air selon la revendication 1 ou 2, **caractérisé en ce que** l'élément de guidage d'air principal (14), lors du décalage de la position de repos dans laquelle il est intégré dans une forme suivant la forme de la région arrière (10), dans la position de fonctionnement, peut pivoter hors de la forme de la région arrière et **en ce que** simultanément ou parallèlement à cela, au moins les portions latérales d'élément de guidage d'air principal (15, 16) peuvent être déplacées transversalement à la direction longitudinale du véhicule en augmentant l'étendue transversale du dispositif de guidage d'air.

4. Dispositif de guidage d'air selon l'une quelconque ou plusieurs des revendications 1 à 3, **caractérisé en ce qu'**un espace (18) se formant lors du déplacement transversal de portions adjacentes d'élément de guidage d'air principal (15, 16) peut être fermé par un élément de guidage d'air supplémentaire (19 ; 42 ; 47).

5. Dispositif de guidage d'air selon la revendication 4, **caractérisé en ce que** l'élément de guidage d'air supplémentaire (19) est intégré dans l'une des portions adjacentes d'élément de guidage d'air principal (15).

6. Dispositif de guidage d'air selon la revendication 4, **caractérisé en ce que** l'élément de guidage d'air supplémentaire (42) est réalisé sous forme de clapet et est connecté de manière articulée à l'une des portions adjacentes d'élément de guidage d'air principal (15) de telle sorte qu'un mouvement de pivotement de l'élément de guidage d'air supplémentaire (42) autour d'un axe de pivotement s'étendant dans une direction longitudinale du véhicule soit accouplé au mouvement de déplacement des portions d'élément de guidage d'air principal (15, 16) transversalement à la direction longitudinale du véhicule et donc au décalage de l'élément de guidage d'air principal (14) de la position de repos vers la position de fonctionnement.

7. Dispositif de guidage d'air selon la revendication 4, **caractérisé en ce que** l'élément de guidage d'air supplémentaire (47) est réalisé sous forme de clapet et est connecté de manière articulée aux deux des portions adjacentes d'élément de guidage d'air principal (15, 16) de telle sorte qu'un mouvement de pivotement de l'élément de guidage d'air supplémentaire (47) autour d'un axe de pivotement s'étendant transversalement à la direction longitudinale du véhicule soit accouplé au mouvement de déplacement des portions d'élément de guidage d'air principal (15, 16) transversalement à la direction longitudinale du véhicule et donc au décalage de l'élément de guidage d'air principal (14) de la position de repos vers la position de fonctionnement.

8. Dispositif de guidage d'air selon l'une quelconque ou plusieurs des revendications 1 à 7, **caractérisé en ce que** chaque portion d'élément de guidage d'air principal (15, 16) est connectée de préférence par le biais de deux éléments d'actionnement (21, 22) à une pièce de carrosserie (12) ou une base de montage (20) du côté de la carrosserie, ou une plaque de montage, chacun des éléments d'actionnement (21, 22) étant connecté par une première portion de manière articulée à la pièce de carrosserie ou à la base de montage (20) ou à la plaque de montage, et par une deuxième portion de manière articulée à la portion d'élément de guidage d'air principal (15, 16) respective.

9. Dispositif de guidage d'air selon la revendication 8, **caractérisé en ce que** les éléments d'actionnement (21, 22) sont connectés par leurs deuxièmes portions par le biais d'articulations sphériques (23) à la portion d'élément de guidage d'air principal (15, 16) respective au niveau d'une extrémité avant de celle-ci.

10. Dispositif de guidage d'air selon la revendication 8 ou 9, **caractérisé en ce qu'**à chaque fois l'un des éléments d'actionnement (21) venant en prise sur la portion d'élément de guidage d'air principal respective peut être entraîné par le biais d'un moteur d'entraînement, les éléments d'actionnement entraînés (21) des portions d'élément de guidage d'air principal (15, 16) étant connectés par le biais d'une tringlerie d'entraînement (26).

11. Dispositif de guidage d'air selon l'une quelconque ou plusieurs des revendications 1 à 10, **caractérisé en ce que** chaque portion d'élément de guidage d'air principal (15, 16) est connectée par le biais de préférence d'un élément d'accouplement (29) à une pièce de carrosserie (12) ou une base de montage (20) du côté de la carrosserie, chaque élément d'accouplement (29) étant connecté par une première extrémité de manière articulée à la pièce de carrosserie ou à la base de montage et par la deuxième extrémité de manière articulée à la portion d'élément de guidage d'air principal (15, 16) respective.

12. Dispositif de guidage d'air selon la revendication 11, **caractérisé en ce que** les éléments d'accouplement (29) viennent en prise par leurs deuxièmes extrémités avec la portion d'élément de guidage d'air principal (15, 16) respective au niveau d'une extrémité arrière de celle-ci.

13. Dispositif de guidage d'air selon l'une quelconque ou plusieurs des revendications 1 à 12, **caractérisé en ce qu'**un espace (32) se formant lors du décalage de l'élément de guidage d'air principal (14) de la position de repos vers la position de fonctionnement entre la pièce de carrosserie (12) et une extrémité avant de l'élément de guidage d'air principal (14) peut être fermé par un élément de fermeture (33 ; 37 ; 50).

14. Dispositif de guidage d'air selon la revendication 13, **caractérisé en ce que** l'élément de fermeture (33) est réalisé sous forme de clapet, ou **en ce que** l'élément de fermeture (37) est réalisé sous forme de bande de fermeture flexible, ou **en ce que** l'élément de fermeture (50) est réalisé sous forme d'élément fixé à la carrosserie.
